# EUROPEAN PATENT APPLICATION

(11) **EP 2 204 355 A1**
(43) Date of publication of application: **07.07.2010**
(21) Application number: 08844710.7
(22) Date of filing: 16.10.2008
(51) Int. Cl.: C03B 40/033, B29C 65/48, B32B 17/10, C03C 17/32, B29L 9/00

(54) **PROCESSES FOR PRODUCING GLASS/RESIN COMPOSITE**

(30) Priority: 30.10.2007 JP 2007282293
(71) Applicant: Asahi Glass Company, Limited, Chiyoda-ku Tokyo 100-8405 (JP)
(72) Inventor: HIGUCHI, Toshihiko, Tokyo 100-8405 (JP); KAMBA, Motoi, Tokyo 100-8405 (JP); SUGIMOTO, Naoki, Tokyo 100-8405 (JP); KONDO, Satoshi, Tokyo 100-8405 (JP)
(74) Representative: Müller-Boré & Partner Patentanwälte
(86) International application number: PCT/JP2008/068799
(87) International publication number: WO 2009/057460

(57) **Abstract**

To provide a process for producing a glass/resin composite having a sufficient transportability, handling efficiency and processability, even though the thickness of the glass is very thin, without impairing excellent properties of glass.

A process for producing a glass/resin composite, which comprises forming molten glass into a glass ribbon and forming a resin layer on at least one surface of the glass ribbon is provided. The resin layer is preferably formed by bonding to a glass ribbon, applying a heat melt resin or applying a curable resin. Further, a process for producing a glass/resin composite, wherein a cut glass substrate is bonded on a continuously supplied resin film is provided.

## Description

### TECHNICAL FIELD

The present invention relates to a process for producing a glass/resin composite which is excellent in handling efficiency, transportability and processability, while maintaining glass properties.

### BACKGROUND ART

In recent years, glass substrates to be used as substrates for displays, covers for sensors and devices, etc. tend to be thin. However, the thinner the thickness of glass substrates, the more remarkable the drawback of glass being "fragile", and its handling becomes difficult at the time of its transportation or processing.

In order to solve such a problem, methods for laminating a resin film on glass have been proposed (for example, Patent Documents 1 to 4). However, there is a problem that due to physical damages to the glass surface caused at the time of cutting or transporting the glass before laminating a resin film thereon, sufficient mechanical strength cannot be secured.
Patent Document 1: JP-A-2003-337549
Patent Document 2: JP-A-2002-534305
Patent Document 3: JP-A-2001-113631
Patent Document 4: JP-A-2001-097733

### DISCLOSURE OF THE INVENTION

### PROBLEMS TO BE SOLVED BY THE INVENTION

The present invention has been accomplished in order to solve the above problem, and it is an object of the present invention to provide a process for producing a glass/resin composite which has sufficient transportability, handling efficiency and processability, even though the glass is very thin.

### MEANS TO SOLVE THE PROBLEMS

The present invention provides a process for producing a glass/resin composite, which comprises forming molten glass into a glass ribbon and forming a resin layer on at least one surface of the glass ribbon.

The above method for forming glass is preferably a float method, a fusion method, a down draw method, a slot down method or a redrawing method, and the glass ribbon preferably has a thickness of from 10 to 300 µm.

The resin film is preferably laminated on the glass ribbon directly or via an adhesive layer or a glue layer.

Preferred is the process, wherein the resin film is laminated on the glass ribbon via a heat melt layer containing a heat meltable resin, and when the heat meltable resin has a melting point, and the melting point of the heat meltable resin is Tm, or when the heat meltable resin does not have a melting point, and the glass transition point of the heat meltable resin is Tg, the resin film is adhered on the glass ribbon via the heat melt layer at a temperature of the formed glass ribbon of from Tm-50°C to Tm+20°C (in the case where the heat meltable resin has a melting point) or at a temperature of the formed glass ribbon of from Tg to Tg+100°C (in the case where the heat meltable resin does not have a melting point).

Further, preferred is the process, wherein a film containing a heat meltable resin is laminated on the glass ribbon to form the resin layer, and when the melting point of the heat meltable resin is Tm, or when the heat meltable resin does not have a melting point, and the glass transition point of the heat meltable resin is Tg, the film is adhered on the glass ribbon at a temperature of the formed glass ribbon of from Tm-50°C to Tm+20°C (in the case where the heat meltable resin has a melting point) or at a temperature of the formed glass ribbon of from Tg to Tg+100°C (in the case where the heat meltable resin does not have a melting point). In the present invention, Tm and Tg are represented by "°C".

Further, the resin layer of the present invention is preferably formed by a method for laminating a film substantially made of a curable resin on the glass ribbon via an adhesive layer or a glue layer or a method for press-bonding a sheet of a partially cured curable resin on the glass ribbon, followed by curing the curable resin.

Further, the present invention provides a process for producing a glass/resin composite, which comprises coating a part of or the entire surface of a continuously supplied resin film with an adhesive or a glue, and then placing and bonding a glass substrate which is cut into a predetermined size on the adhesive- or glue-coated surface of the resin film.

Further, the present invention provides a process for producing a glass/resin composite, which comprises bonding a glass substrate which is cut into a predetermined size and of which one surface is coated with an adhesive or a glue to a continuously supplied resin film, wherein the adhesive- or glue- coated surface of the glass substrate faces the resin film.

In the present invention, the glass substrate preferably has a thickness of from 10 to 300 µm. Further, the present invention provides a process for producing a glass/resin composite, which comprises producing the composite by the above process, and winding it up into a roll shape.

### EFFECTS OF THE INVENTION

By the process of the present invention for forming a resin layer on a glass ribbon immediately after the formation of the glass ribbon, the resin layer is formed on a surface of the glass before a step of cutting or a step of transporting the formed glass ribbon. The possibility of physical damages on the glass surface is thereby low, and it is possible to obtain a glass/resin composite having a high mechanical strength. Depending on the step of forming a resin layer, it is possible to form the resin layer on a molten glass surface which has not been contacted to other members, and the physical damages on the glass surface can be remarkably reduced in principle.

Further, before cutting the glass ribbon having a thickness of from 10 to 300 µm and flexibility, a resin layer is formed on its surface, and it is therefore possible to wind the glass resin composite up into a roll shape.

Further, in the case of the process of the present invention wherein a cut glass substrate is bonded to a continuously supplied resin film, the glass/resin composite obtained by this process has a part which is only the resin film between adjacent glass substrates, namely a part which is not a composite layer structure of the glass substrate and the resin film exists, and it is thereby possible to obtain an effect that the composite can be easily cut at such a part.

### BRIEF DESCRIPTION OF THE DRAWINGS

Fig. 1 is a schematic view illustrating the process in Example 1 of the present invention.
Fig. 2 is a schematic view illustrating the process in Example 2 of the present invention.
Fig. 3 is a schematic view illustrating the process in Example 3 of the present invention.
Fig. 4 is a schematic view illustrating the process in Example 4 of the present invention.
Fig. 5 is a schematic view illustrating the process in Example 5 of the present invention.
Fig. 6 is a schematic view illustrating the process in Example 6 of the present invention.
Fig. 7 is a schematic view illustrating the process in Example 9 of the present invention.
Fig. 8 is a schematic view illustrating the process in Example 10 of the present invention.

### EXPLANATION OF SYMBOLS

- 1:: glass ribbon
- 2:: slowly cooling part
- 3:: resin film
- 4:: nip roller
- 5:: glass/resin composite
- 6:: die coater
- 7:: oven
- 8:: dip coater
- 9:: curable resin
- 10:: UV irradiation apparatus
- 11:: polyamic acid green sheet provided with a PET coating film
- 12:: PET coating film
- 13:: photocurable resin film provided with a PET coating film

### BEST MODE FOR CARRYING OUT THE INVENTION

Now, the process of the present invention for producing a glass/resin composite will be described.

The first embodiment of the present invention is a process for producing a glass/resin composite by forming a resin film on a surface of a glass ribbon which is continuously formed. Various materials such as soda lime glass, alkali free glass, etc. may be used for the glass ribbon, however, the alkali free glass is preferred from the viewpoint of strength and chemical resistance. Molten glass may be formed into the glass ribbon by a float process, fusion process, down draw process, slot down process or redraw process.

The glass ribbon used in the present invention preferably has a thickness of from 10 µm to 300 µm, particularly preferably from 50 µm to 150 µm. If the thickness of the glass ribbon is less than 10 µm, it is difficult to form a resin layer thereon. On the other hand, if the thickness of the glass ribbon exceeds 300 µm, since the strength of the glass itself is secured, it is not necessary to form a resin layer, and since the flexibility of the glass itself is lost, it is difficult to obtain a glass/resin composite in the form of a roll shape.

The type of the resin used for the resin layer is not particularly restricted, so long as the resin can impart the strength to glass, however, the type of the resin can be preferably selected depending on the heat resistance, chemical resistance, etc. required for the particular application of the glass/resin composite.

The resin may, for example, be a polyester resin, a polycarbonate resin, a polyether sulfone resin, a polyolefin resin, a polyvinyl alcohol resin, a silicone resin, a polyamide resin, an acrylic resin, a polystyrene resin, a triacetylcellulose resin, a polyimide resin, a polyvinyl chloride resin or a fluorinated resin. Further, it may be a copolymer of such a resin or one containing an additive such as a filler.

It is possible to construct the glass/resin composite to have a double layer structure of glass/resin layers or a triple layers structure of resin layer/glass/resin layers wherein both surfaces are resin layers. In a case where the glass/resin composite is to be used as a display substrate, since high flatness is required at a display side surface, the double layer structure of glass/resin layer is preferred.

As the method for forming a resin layer, the following methods are preferred.
(1) A method for laminating a resin which is preliminarily formed into a film shape on a glass ribbon via a heat melt layer containing a heat meltable resin.
(2) A method for directly laminating a film form resin containing a heat meltable resin on a glass ribbon.
(3) A method for applying a heat melt resin on a glass ribbon directly or via an adhesive layer or a glue layer to form a resin layer.
(4) A method for applying a curable resin on a glass ribbon directly or via an adhesive layer or a glue layer, followed by curing.

Further, in a case where the heat meltable resin has a melting point, and the melting point is Tm, or in a case where the heat meltable resin does not have a melting point, and the glass transition point of the heat meltable resin is Tg, in the case of the method (1), a resin film is preferably adhered on a glass ribbon via a heat melt layer at a temperature of the formed glass ribbon of from Tm-50°C to Tm+20°C (in the case where the heat meltable resin has a melting point) or at a temperature of from Tg to Tg+100°C (in the case where the heat meltable resin does not have a melting point). In the case of the method (2), a resin film is preferably adhered on a glass ribbon via the heat melt layer at a temperature of the formed glass ribbon of from Tm-50°C to Tm+20°C (in the case where the heat meltable resin has a melting point) or at a temperature of from Tg to Tg+100 (in the case where the heat meltable resin does not have a melting point). If the temperature of the glass ribbon is less than Tm-50°C or Tg, the resin film cannot be adhered on the glass ribbon. If the temperature of the glass ribbon is higher than Tm+20°C or Tg+100°C, the heat melt layer flows out from an interface, and the resin film cannot be adhered on the glass ribbon. In the above, the temperature of the formed glass ribbon is particularly preferably from Tm-30°C to Tm+5°C (in the case where the heat meltable resin has a melting point) or particularly preferably from Tg to Tg+80°C (in the case where the heat meltable resin does not have a melting point).

Further, as a method for forming a resin layer, the following methods can be preferably used in addition to the above methods for forming a resin layer.
(5) A method for laminating a film substantially made of a curable resin on a glass ribbon via an adhesive layer or a glue layer.
(6) A method for press-bonding a sheet of a curable resin which is partially cured, followed by curing the curable resin.

As the method for applying a heat melt resin or a curable resin on a surface of a glass ribbon, a spray coating method, a die coating method, a float coating method, a dip coating method or the like may be employed. As the method for curing the curable resin, heat curing, UV curing, moist heat curing or the like may be employed.

The resin layer may be formed after forming a glass ribbon and cooling the glass ribbon to around normal temperature via a slowly cooling step or may be formed before or during the slowly cooling step, when the glass ribbon is still hot. In a case where the resin layer is formed before or during the slow cooling step, heat energy of the glass ribbon can be utilized to melt the surface of the film state resin or improve adhesion.

Further, according to the present invention, a glass/resin composite which is wound up into a roll shape can be obtained by forming a resin layer on a surface of a glass ribbon, followed by winding up it by an apparatus for winding. Such a glass resin composite wound up into the roll shape can be used in steps for producing display devices by a roll to roll method. When the glass/resin composite is wound up into the roll shape, a paper (inserting paper), a resin film or the like may be inserted between a composite and a composite as a case requires.

For example, while releasing the roll obtained by the production process of the present invention, the glass/resin composite is continuously supplied, and a thin film transistor (TFT) is formed on the glass by the photolithography step, followed by cutting the glass/resin composite into the desired length and peeling/removing the resin to obtain a glass substrate with TFT.

Further, other embodiments of the present invention will be described. The second embodiment of the production process of the present invention is a process wherein a part of or the entire surface of a continuously supplied resin film is coated with an adhesive or a glue, and then a glass substrate which is cut into a predetermined size is placed and bonded on the adhesive or glue coating surface of the resin film.

Further, the third embodiment of the production process of the present invention is a process wherein a glass substrate which is cut into a predetermined size and on which one surface is coated with an adhesive or a glue is placed and bonded to a continuously supplied resin film. In the case of the third embodiment, the adhesive or glue-coated surface of the glass substrate faces the resin film.

The first embodiment is a process for producing a composite of a continuous resin film and continuous glass ribbon, while the second and third embodiments are processes for producing a composite of a continuous resin film and uncontinuous glass substrate.

In the same manner as in the first embodiment, as the resin film of the second or the third embodiment, a polyester resin, a polycarbonate resin, a polyether sulfone resin, a polyolefin resin, a polyvinyl alcohol resin, a silicone resin, a polyamide resin, an acrylic resin, a polystyrene resin, a triacetylcellulose resin, a polyimide resin, a polyvinyl chloride resin, a fluorinated resin, a copolymer of the above resins or one in which an additive such as a filler may be contained, may be used.

In the production process of the second embodiment, in order to apply an adhesive or a glue on a resin film, a die coater or a roll coater may be used. In the production process of the third embodiment, in order to apply an adhesive or a glue on a glass substrate, a die coater, a roll coater, a screen printing or the like may be used.

Then, the adhesive or glue applied on the resin film or the glass substrate by the above method is appropriately cured by the method employing heat, UV or the like, to fix the resin film on the glass substrate firmly.

The glass/resin composite obtained by such a production process can be wound up into a roll shape by using a winding apparatus after bonding the glass substrate on the resin film in the same manner as in the production process of the first embodiment.

The roll of the glass/resin composite obtained by the production process of the second embodiment or the third embodiment can be used in the display device production steps by the roll to roll method in the same manner as in the first embodiment.

Here, when the glass/resin composite is cut into a desired length after forming a thin film transistor (TFT) on the glass, it is preferred to cut a part between adjacent glass substrate (a part of only the resin film wherein the glass substrate is not bonded). Because it is easy to cut only the resin film, compared to a case where both the glass and the resin film are cut simultaneously. Now, Examples of the present invention and Comparative Examples will be described with reference to figures. However, the present invention is not particularly restricted to the following Examples.

### EXAMPLES

### EXAMPLE 1

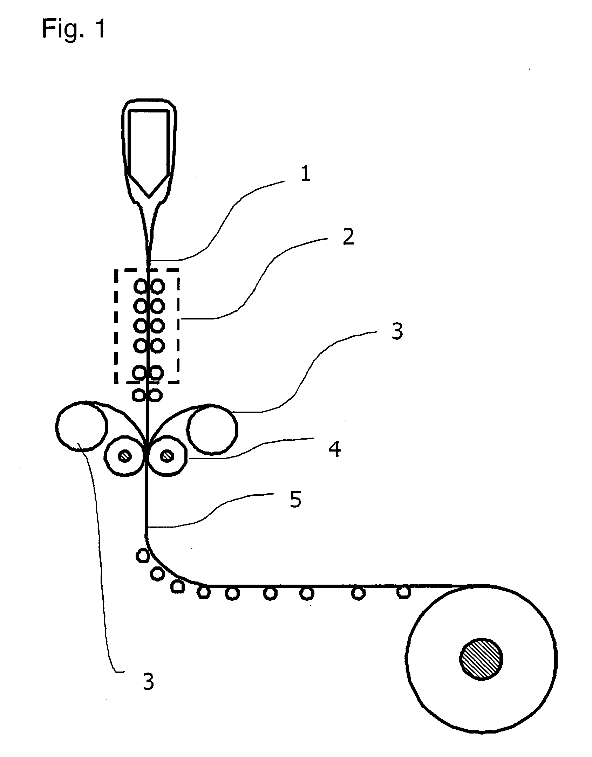

An example of the present invention is described with reference to Fig. 1.

A glass ribbon 1 (AN100, manufactured by Asahi Glass Company, Limited) having a linear expansion coefficient of 38×10⁻⁷/°C was formed into a thickness of 100 µm by a conventionally known fusion method, followed by cooling to around 120°C at a slowly cooling part 2. Then, resin films (polyethylene terephthalate film) 3 having a thickness of 50 µm were lamented on both surfaces of the glass ribbon 1 via a urethane hot melt adhesive layer (thickness: 30 µm, melting point: 120°C; not shown on drawings) by using a nip roller 4 adjusted to 120°C to obtain glass/resin composite 5.

### COMPARATIVE EXAMPLE 1

A glass ribbon (AN100, manufactured by Asahi Glass Company, Limited) having a linear expansion coefficient of 38×10⁻⁷/°C was formed into a thickness of 100 µm by a conventionally known fusion method and temporary slowly cooled to room temperature. Then, it was tried to heat melt-fix a thermoplastic polyimide resin film (Aurum film, manufactured by Mitsui Chemicals, Inc., glass transition point: 250°C) having a thickness of 50 µm on one surface of the glass ribbon at 230°C (the maximum setting temperature of a resin roller).

### COMPARATIVE EXAMPLE 2

A glass ribbon (AN100, manufactured by Asahi Glass Company, Limited) having a linear expansion coefficient of 38×10⁻⁷/°C was formed into a thickness of 100 µm by a conventionally known fusion method and slowly cooled to around 150°C, and polyethylene terephthalate films having a thickness of 50 µm were laminated on both surfaces of the glass ribbon via a urethane hot melt adhesive layer (thickness: 30 µm, melting potni:120°C) by using a nip roller adjusted to 150°C.

### EXAMPLE 2

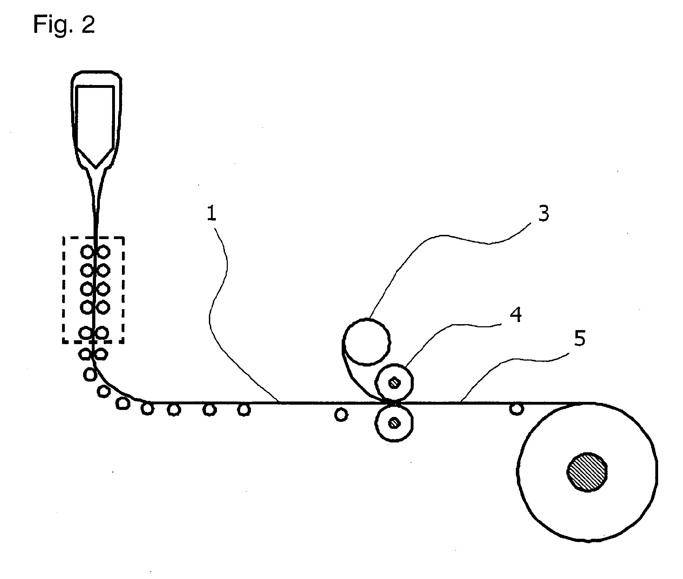

An Example of the present invention is described with reference to Fig. 2. A glass ribbon 1 (AN100, manufactured by Asahi Glass Company, Limited) having a linear expansion coefficient of 38×10⁻⁷/°C was formed into a thickness of 100 µm by a conventionally known fusion method and slowly cooled to around normal temperature (hereinafter, normal temperature means about 20°C). A resin film (polyethylene terephthalate film) 3 having a thickness of 50 µm was laminated on one surface of the glass ribbon 1 via an acrylic adhesive layer (not shown on the figure) by using a nip roller 4 to obtain a glass/resin composite 5.

### EXAMPLE 3

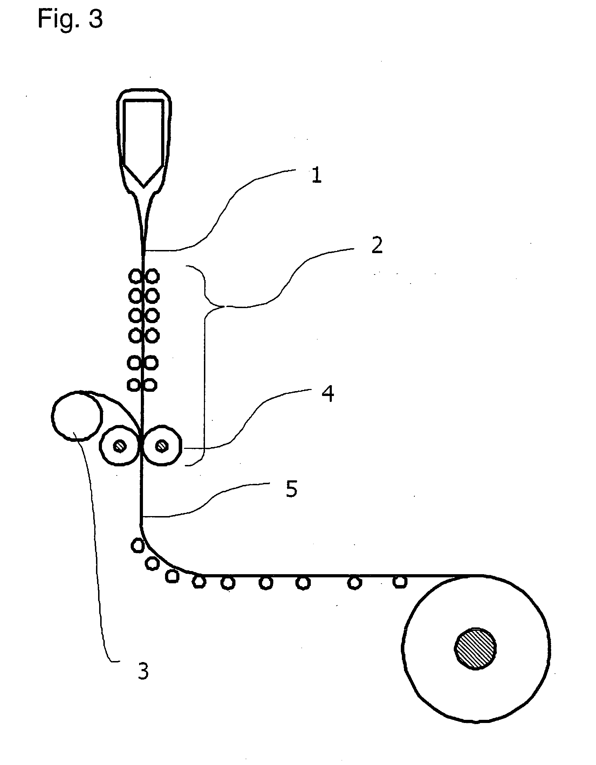

An example of the present invention is described with reference to Fig. 3. A glass ribbon 1 (AN100, manufactured by Asahi Glass Company, Limited) having a linear expansion coefficient of 38×10⁻⁷/°C was formed into a thickness of 100 µm by a conventionally known fusion method. When the surface temperature of the glass ribbon 1 was 300°C in the slowly cooling part 2, a thermoplastic polyimide resin film 3 (Aurum film, manufactured by Mitsui Chemicals, Inc., glass transition point: 250°C) having a thickness of 50 µm was heat melt-fixed on one surface of the glass ribbon 1 by using a nip roller 4 to obtain a glass/resin composite.

### EXAMPLE 4

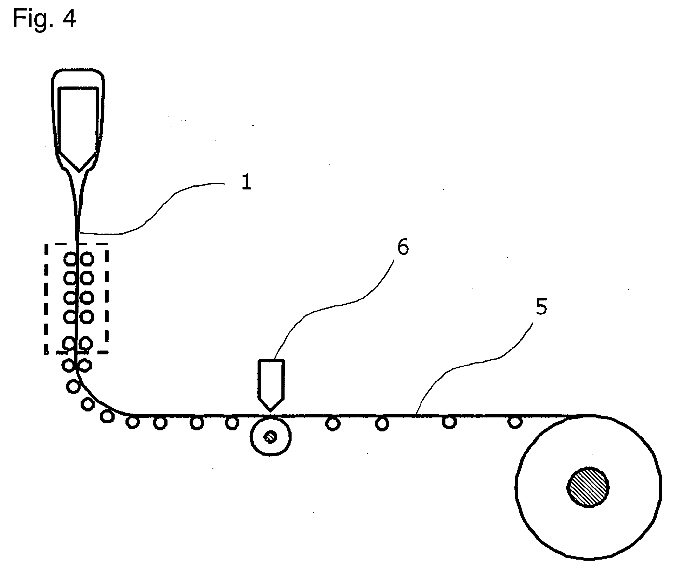

An example of the present invention is described with reference to Fig. 4. A glass ribbon 1 (AN100, manufactured by Asahi Glass Company, Limited) having a linear expansion coefficient of 38×10⁻⁷°C was formed into a thickness of 100 µm by a conventionally known fusion method, followed by cooling to around normal temperature. Then, a molten thermoplastic acrylic resin (not shown) was applied on one surface of the glass ribbon 1 so as to be a thickness of 50 µm by using a die coater 6. Then, the thermoplastic acrylic resin was cooled so as to be solidified and to obtain a glass/resin composite 5.

### EXAMPLE 5

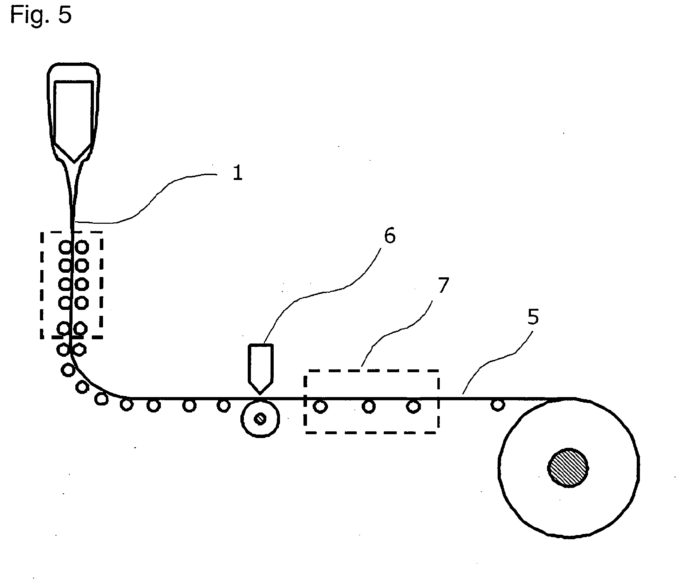

An example of the present invention is described with reference to Fig. 5. A glass ribbon 1 (AN100, manufactured by Asahi Glass Company, Limited) having a linear expansion coefficient of 38×10⁻⁷/°C was formed into a thickness of 100 µm by a conventionally known fusion method, followed by slowly cooling to around normal temperature. Then, a heat curable silicone resin (not shown) was applied on one surface of the glass ribbon 1 so as to be 20 µm by using a die coater 6. Then, the heat curable silicone resin was heat-cured at 100°C for 10 minutes in an oven 7 to obtain a glass/resin composite 5.

### EXAMPLE 6

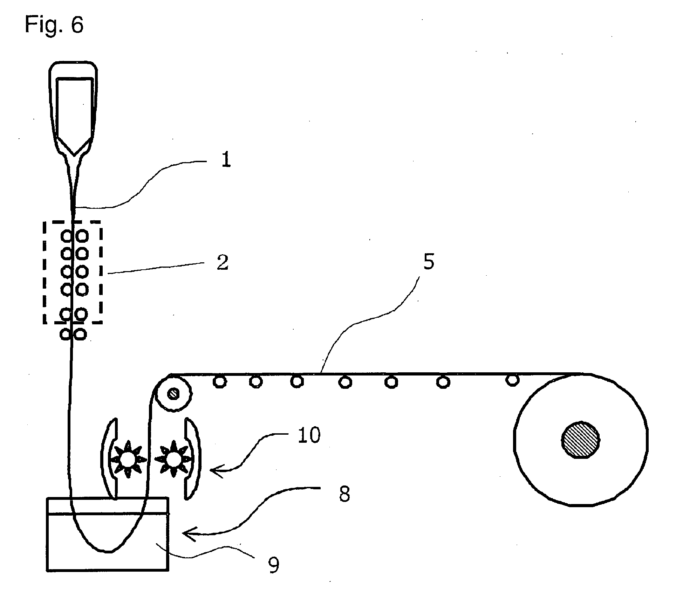

An example of the present invention is described with reference to Fig. 6. A glass ribbon 1 (AN100, manufactured by Asahi Glass Company, Limited) having a linear expansion coefficient of 38×10⁻⁷/°C was formed into a thickness of 100 µm by a conventionally known fusion method, followed by slowing cooling to around normal temperature by making the formed glass ribbon 1 pass through a slowly cooling part 2. Then, a curable resin (acrylic UV curing resin) 9 was applied on both surfaces of the glass ribbon 1 so as to be a thickness of 50 µm by using a dip coater 8. Then, the acrylic UV curable resin was irradiated with UV rays so as to be cured by using a UV irradiation apparatus 10 to obtain a glass/resin composite 5.

### EXAMPLE 7

A glass film (AN1 00, manufactured by Asahi Glass Company, Limited) having a linear expansion coefficient of 38×10⁻⁷/°C was formed into a thickness of 100 µm by a conventionally known float method, followed by slowing cooling to around normal temperature, and then the glass film was cut into a predetermined size (730x920 mm) to obtain a flat glass substrate. The glass substrate was bonded to a continuously supplied polyethylene terephthalate film having a thickness of 50 µm to obtain a glass/resin composite. At the time of bonding the glass to the resin film, an acrylic adhesive layer was applied on a surface of the polyethylene terephthalate film.

### EXAMPLE 8

A glass film (AN100, manufactured by Asahi Glass Company, Limited) having a linear expansion coefficient of 38×10⁻⁷/°C was formed into a thickness of 100 µm by a conventionally known float method, followed by slowing cooling to around normal temperature, and then the glass film was cut into a predetermined size (730x920 mm) to obtain a flat glass substrate. The glass substrate was bonded to a continuously supplied polyethylene terephthalate film having a thickness of 50 µm to obtain a glass/resin composite. At the time of bonding the glass to the resin film, an acrylic adhesive layer was applied on a surface of the glass substrate.

### EXAMPLE 9

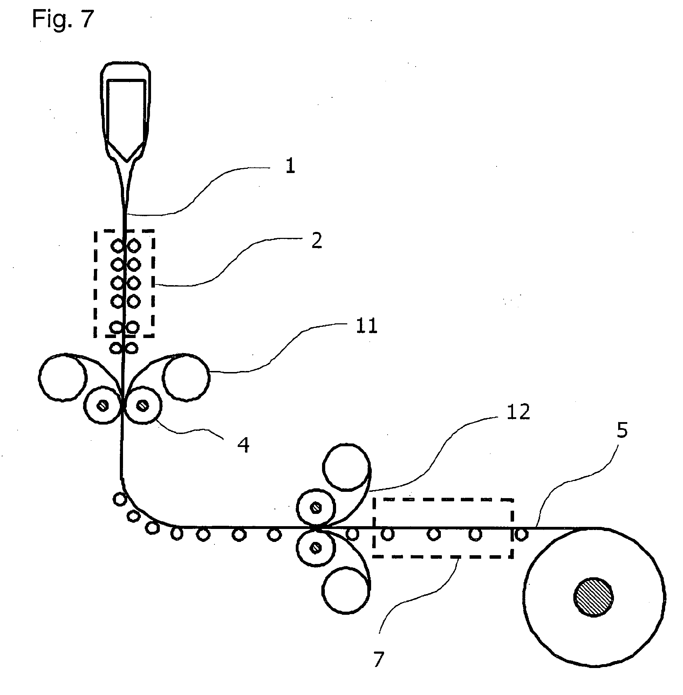

An example of the present invention is described with reference to Fig. 7. An N-methylpyrrolidone solution (50 mass%) of polyamic acid was die coated on a continuously transported stainless steel sheet (its surface is mirror-finished, thickness: 300 µm) so as to be 80 µm. Then, the die coated stainless steel sheet was passed in a continuous oven set to be 230°C for 10 minutes, the concentration of the N-methylpyrrolidone solution of polyamic acid was increased to 85 mass%, a green sheet (a partially cured curable resin sheet) of the polyamic acid was peeled from the stainless steel sheet, and the green sheet was sandwiched with a polyethylene terephthalate film having a thickness of 30 µm. Thus, a polyamic acid green sheet provided with a polyethylene terephthalate (PET) coating film having a thickness of 50 µm was obtained.

Then, a glass ribbon 1 (AN100, manufactured by Asahi Glass Company, Limited) having a linear expansion coefficient of 38×10⁻⁷/°C was formed into a thickness of 100 µm by a conventionally known fusion method and passed through a slowly cooling part 2 so as to be cooled to around 150°C.

Then, while peeling the PET coating film from one surface (which contacts to the glass ribbon 1) of the polyamic acid green sheet 11 provided with the PET coating film, polyamic acid green sheets 11 provided with a PET coating film were press-bonded on both surfaces of the glass ribbon 1. Then, while peeling the PET coating film 12 on the outer side of the polyamic acid green sheet 11 provided with the PET coating film, the polyamic acid green sheet 11 was passed through a continuous oven 7 set to be 300°C for 60 minutes, and the imidation reaction was terminated to obtain a glass/resin composite 5.

### EXAMPLE 10

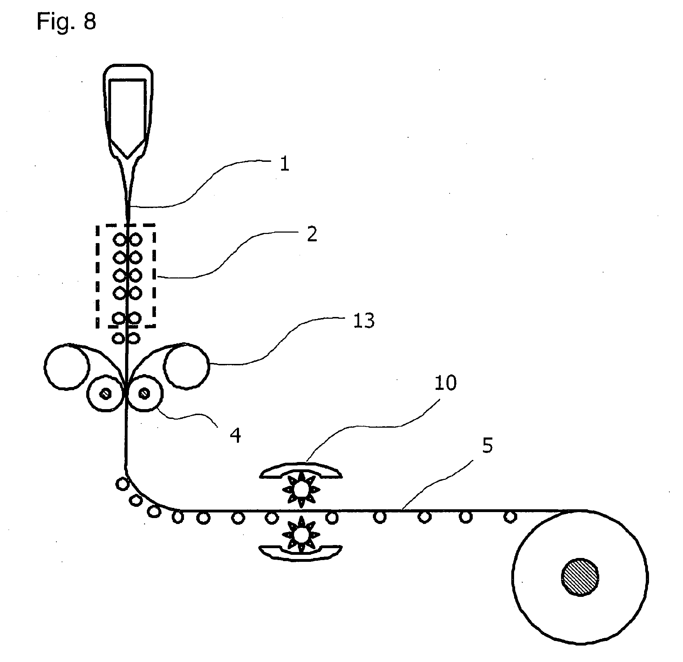

An example of the present invention is described with reference to Fig. 8. A glass ribbon 1 (AN 100, manufactured by Asahi Glass Company, Limited) having a linear expansion coefficient of 38×10⁻⁷/°C was formed into a thickness of 100 µm by a conventionally known fusion method and passed through a slowly cooling part 2 so as to be cooled to around 50°C. Then, while peeling the PET coating film from one surface (inner side), a photocurable resin films 13 (photocurable dry film manufactured by DuPont MRC dry film, FX100, thickness: 50 µm) provided with a PET coating film was press-bonded on both surfaces of the glass ribbon 1 by using a nip roller 4. Then, the outermost layer of the PET coating film was irradiated with UV rays by a UV irradiation apparatus 10, and curing reaction of the photocurable resin film was terminated to obtain a glass/resin composite 5.

The glass/resin composites obtained by the Examples 1 to 10 are excellent in flexibility and can be wound up into a roll shape. Therefore, although such a glass is extremely thin, it is excellent in transportability, handling ability and processability. On the other hand, by the method of Comparative Example 1, the thermoplastic polyimide resin film will not be soft sufficiently, and glass/resin composites cannot be obtained. Further, by the method of Comparative Example 2, the urethane hot melt adhesive flowed out from an adhesive interface, and glass/resin composites cannot be obtained.

### INDUSTRIAL APPLICABILITY

The glass/resin composite obtained by the production process of the present invention can be used as substrates for displays or covers for sensor or devices.

The entire disclosure of Japanese Patent Application No. 2007-282293 filed on October 30, 2007 including specification, claims, drawings and summary is incorporated herein by reference in its entirety.

## Claims

1. . A process for producing a glass/resin composite, which comprises forming molten glass into a glass ribbon and forming a resin layer on at least one surface of the glass ribbon.

2. . The process for producing a glass/resin composite according to Claim 1, wherein the glass forming method is a float method, a fusion method, a down draw method, a slot down method or a redrawing method.

3. . The process for producing a glass/resin composite according to Claim 1 or 2, wherein the glass ribbon has a thickness of from 10 to 300 µm.

4. . The process for producing a glass/resin composite according to any one of Claims 1 to 3, wherein a resin film is laminated on the glass ribbon via a heat melt layer containing a heat melatable resin having a melting point to form the resin layer, and when the melting point of the heat meltable resin is Tm, the resin film is adhered on the glass ribbon via the heat melt layer at a temperature of the formed glass ribbon of from Tm-50°C to Tm+20°C.

5. . The process for producing a glass/resin composite according to any one of Claims 1 to 3, wherein a resin film is laminated on the glass ribbon via a heat melt layer containing a heat melatable resin having no melting point to form the resin layer, and when the glass transition point of the heat meltable resin is Tg, the resin film is adhered on the glass ribbon via the heat melt layer at a temperature of the formed glass ribbon of from Tg to Tg+100°C.

6. . The process for producing a glass/resin composite according to any one of Claims 1 to 3, wherein a film containing a heat melatable resin having a melting point is laminated on the glass ribbon to form the resin layer, and when the melting point of the heat meltable resin is Tm, the film is adhered on the glass ribbon at a temperature of the formed glass ribbon of from Tm-50°C to Tm+20°C.

7. . The process for producing a glass/resin composite according to any one of Claims 1 to 3, wherein a film containing a heat melatable resin having no melting point is laminated on the glass ribbon to form the resin layer, and when the glass transition point of the heat meltable resin is Tg, the resin film is adhered on the glass ribbon at a temperature of the formed glass ribbon of from Tg to Tg+100°C.

8. . The process for producing a glass/resin composite according to any one of Claims 1 to 3, wherein a heat meltable resin is applied directly or via an adhesive layer or a glue layer to the glass ribbon to form the resin layer.

9. . The process for producing a glass/resin composite according to any one of Claims 1 to 3, wherein a curable resin is applied directly or via an adhesive layer or a glue layer to the glass ribbon, followed by curing the curable resin to form the resin layer.

10. . The process for producing a glass/resin composite according to any one of Claims 1 to 3, wherein a film substantially made of a curable resin is laminated on the glass ribbon via an adhesive layer or a glue layer to form the resin layer.

11. . The process for producing a glass/resin composite according to any one of Claims 1 to 3, wherein a sheet of a partially cured curable resin is press-bonded on the glass ribbon, followed by curing the curable resin.

12. . A process for producing a glass/resin composite, which comprises coating a part of or the entire surface of a continuously supplied resin film with an adhesive or a glue, and then placing and bonding a glass substrate which is cut into a predetermined size on the adhesive- or glue-coated surface of the resin film.

13. . A process for producing a glass/resin composite, which comprises bonding a glass substrate which is cut into a predetermined size and of which one surface is coated with an adhesive or a glue to a continuously supplied resin film, wherein the adhesive- or glue- coated surface of the glass substrate faces the resin film.

14. . The process for producing a glass/resin composite according to Claim 12 or 13, wherein the glass substrate has a thickness of from 10 to 300 µm.

15. . A process for producing a glass/resin composite, which comprises producing the composite by the process as defined in any one of Claims 1 to 14, and winding it up into a roll shape.
